# EUROPÄISCHE PATENTANMELDUNG

(11) **EP 4 814 332 A1**
(43) Veröffentlichungstag der Anmeldung: **30.09.2026**
(21) Anmeldenummer: 26168239.7
(22) Anmeldetag: 26.03.2026
(51) Int. Cl.: F16D 11/00

(54) **GETRIEBE, ANTRIEBSEINHEIT UND GREIF- ODER SPANNEINRICHTUNGEN MIT EINEM SOLCHEN GETRIEBE**

(30) Priorität: 26.03.2025 DE 102025111671
(71) Anmelder: Heinz-Dieter Schunk GmbH & Co. Spanntechnik KG, 88512 Mengen (DE)
(72) Erfinder: Briemle, Sven, 88367 Hohentengen-Ölkofen (DE)
(74) Vertreter: DREISS Patentanwälte PartG mbB

(57) **Zusammenfassung**

Die Erfindung betrifft ein Getriebe (16), insbesondere zur Verwendung in elektronischen Greif- oder Spannrichtungen, eine Antriebseinheit (10) und elektronische Greif- oder Spanneinrichtungen (120), wobei das Getriebe eine Antriebswelle (24), einen Exzenter (28), ein erstes innenliegendes Zahnrad (30), ein erstes außenliegendes Zahnrad (38), ein zweites innenliegendes Zahnrad (32), ein zweites außenliegendes Zahnrad (40), ein erstes Abtriebselement (46), ein zweites Abtriebselement (48) und eine Abtriebswelle (58) umfasst.

## Beschreibung

Die Erfindung betrifft ein Getriebe, insbesondere zur Verwendung in elektronischen Greif- oder Spanneinrichtungen, eine Antriebseinheit und eine elektronische Greif- oder Spanneinrichtung.

Elektronische Greif- oder Spanneinrichtungen weisen mehrere bewegbare Greif- oder Spannelemente auf, die das zu fixierende Bauteil einspannen können. Zum Antrieb der Greif- oder Spannelemente wird ein Elektromotor eingesetzt, dessen Leistung dem Produkt aus Drehzahl und Drehmoment entspricht. Um die zum Greifen oder Spannen der Bauteile notwendigen Kräfte aufzubringen, wird das durch den Elektromotor bereitgestellte Drehmoment in einem Getriebe erhöht. Dies hat zur Folge, dass aufgrund des umgekehrt proportionalen Zusammenhangs die Drehzahl und damit die Verfahrgeschwindigkeit der Greif- oder Spannelemente abnimmt. Folglich nimmt das Greifen oder Spannen von Bauteilen, die einen langen Verfahrweg der Greif- oder Spannelemente benötigen, viel Zeit in Anspruch. Insbesondere ist das Umrüsten von Bauteilen mit großem Durchmesser im Spannbereich zu Bauteilen mit kleinem Durchmesser im Spannbereich und umgekehrt wenig effizient.

Aus der EP 3 301 323 und der EP 3 301 324 sind Zykloidgetriebe mit zwei Getriebestufen bekannt.

Der Erfindung liegt die Aufgabe zu Grunde, ein Getriebe, eine Antriebseinheit und eine elektronische Greif- oder Spanneinrichtung bereitzustellen, die ein effizientes Greifen oder Spannen von Bauteilen, insbesondere mit unterschiedlichen Durchmessern, ermöglichen.

Diese Aufgabe wird gelöst durch ein Getriebe nach Anspruch 1. Dieses umfasst eine Antriebswelle, einen Exzenter, ein erstes innenliegendes Zahnrad und ein erstes außenliegendes Zahnrad. Das erste innenliegende Zahnrad und das erste außenliegende Zahnrad umfassen mehrere Zähne, die insbesondere gleichmäßig entlang des äußeren bzw. inneren Umfangs verteilt angeordnet sind. Die des ersten innenliegenden und des ersten außenliegenden Zahnrads sind insbesondere abgerundet und weisen bogenförmige Flanken auf. Die Zähne des ersten innenliegenden Zahnrads sind insbesondere als Nocken und die Zähne des ersten außenliegenden Zahnrads insbesondere als Rollen ausgebildet. Ferner umfasst das Getriebe ein erstes Abtriebselement und eine Abtriebswelle, welche eine Schnittstelle zu nachfolgenden Baugruppen darstellt, beispielsweise zu einer Spanneinheit mit Greif- oder Spannelementen. Die Antriebswelle und die Abtriebswelle sind koaxial zueinander entlang einer Getriebelängsachse angeordnet.

Die Antriebswelle und der Exzenter sind drehfest und bevorzugt auch verschiebefest miteinander verbunden. Es ist möglich, dass die Antriebswelle und der Exzenter separat voneinander bereitgestellt werden und insbesondere mithilfe einer Formschlussverbindung, bevorzugt durch Mehrkantflächen, drehfest miteinander verbunden sind. Dadurch werden eine modulare Bauweise des Getriebes ermöglicht sowie eine sichere Drehmomentübertragung gewährleistet. Alternativ hierzu ist es möglich, dass die Antriebswelle und der Exzenter einstückig ausgebildet sind. Dadurch kann der Montageaufwand reduziert werden. Der Exzenter weist einen auf einer orthogonal zu der Getriebelängsachse verlaufenden Exzenterebenen liegenden Exzentermittelpunkt auf. Der Exzentermittelpunkt ist um ein Exzentrizitätsmaß von der Getriebelängsachse beabstandet.

Das erste innenliegende Zahnrad weist mindestens eine weitgehend zentrisch angeordnete, vorzugsweise kreisrunde, Hauptausnehmung auf. Der Exzenter ist in der Hauptausnehmung des ersten innenliegenden Zahnrads angeordnet, wobei der Exzenter und das erste innenliegende Zahnrad relativ zueinander verdrehbar sind. Es ist bevorzugt, wenn zwischen der Hauptausnehmung und dem Exzenter ein Rotationslager angeordnet ist, insbesondere ein Gleitlager oder ein Kugellager oder ein Nadellager. Auf diese Weise können die zwischen dem Exzenter und dem ersten innenliegenden Zahnrad wirkenden Reibungskräfte reduziert werden.

Das erste innenliegende Zahnrad und das erste außenliegende Zahnrad weisen eine voneinander abweichende Anzahl an Zähnen auf. Das erste innenliegende Zahnrad wälzt sich an dem ersten außenliegenden Zahnrad ab und führt dabei eine elliptische Bewegung um die Getriebelängsachse herum aus.

Das erste innenliegende Zahnrad weist mehrere, insbesondere kreisrunde, Nebenausnehmungen auf. Die Nebenausnehmungen sind um die Hauptausnehmung herum, insbesondere mit gleichem Winkelabstand zueinander auf einer zu der Hauptausnehmung konzentrischen Kreislinie angeordnet.

Das erste Abtriebselement weist mehrere Mitnehmerbolzen auf, die einen kleineren Durchmesser aufweisen als die Nebenausnehmungen des ersten innenliegenden Zahnrads. Vorzugsweise ist der Durchmesser der Mitnehmerbolzen zumindest annähernd um das doppelte Exzentrizitätsmaß des Exzenters kleiner als der Durchmesser der Nebenausnehmungen des ersten innenliegenden Zahnrads. Die Mitnehmerbolzen sind so angeordnet, dass sie in die Nebenausnehmungen des ersten innenliegenden Zahnrads korrespondierend eingreifen. Es ist möglich, dass an den Umfangsflächen der Mitnehmerbolzen verschleißoptimierte und/oder reibungsoptimierte Materialien und/oder Oberflächenstrukturen vorgesehen sind, insbesondere Gleitlager.

Ein Übersetzungsverhältnis i₁ dieses Getriebegangs bestimmt sich gemäß nachfolgender Formel, wobei z₁ die Anzahl der Zähne des ersten außenliegenden Zahnrads und z₂ die Anzahl der Zähne des ersten innenliegenden Zahnrads sind: ${i}_{1} = {z}_{2} / \left({z}_{1}-{z}_{2}\right)$

Insbesondere ist die Anzahl der Zähne des ersten außenliegenden Zahnrads z₁ um 1 größer als die Anzahl der Zähne des ersten innenliegenden Zahnrads z₂. In diesem Fall bestimmt die Anzahl der Zähne des ersten innenliegenden Zahnrads z₂ das Übersetzungsverhältnis dieses Getriebegangs.

Erfindungsgemäß umfasst das Getriebe ein zweites innenliegendes Zahnrad, das Zähne umfasst. Das erste innenliegende Zahnrad und das zweite innenliegende Zahnrad sind drehfest miteinander verbunden. Ferner umfasst das Getriebe ein zweites außenliegendes Zahnrad, das Zähne umfasst. Die Zähne des zweiten innenliegenden und des zweiten außenliegenden Zahnrads sind insbesondere abgerundet und weisen bogenförmige Flanken auf. Die Zähne des zweiten innenliegenden Zahnrads sind insbesondere als Nocken und die Zähne des zweiten außenliegenden Zahnrads insbesondere als Rollen ausgebildet. Das zweite innenliegende Zahnrad rollt in dem zweiten außenliegenden Zahnrad ab und treibt dieses an. Das Getriebe umfasst außerdem ein zweites Abtriebselement, das drehfest mit dem zweiten außenliegenden Zahnrad verbunden ist.

Ein Übersetzungsverhältnis i₂ dieses Getriebegangs bestimmt sich gemäß nachfolgender Formel, wobei z₁ die Anzahl der Zähne des ersten außenliegenden Zahnrads, z₂ die Anzahl der Zähne des ersten innenliegenden Zahnrads sind, z₃ die Anzahl der Zähne des zweiten innenliegenden Zahnrads und z₄ die Anzahl der Zähne des zweiten außenliegenden Zahnrads sind: ${i}_{2} = 1 / \left(1-\left({z}_{1}*{z}_{3}/{z}_{2}*{z}_{4}\right)\right)$

Insbesondere sind die Anzahl der Zähne des ersten außenliegenden Zahnrads z₁ um 1 größer als die Anzahl der Zähne des ersten innenliegenden Zahnrads z₂, die Anzahl der Zähne des zweiten außenliegenden Zahnrads z₄ um 1 größer als die Anzahl der Zähne des zweiten innenliegenden Zahnrads z₃ und der Betrag der Differenz der Anzahl der Zähne des ersten außenliegenden Zahnrads z₁ und der Anzahl der Zähne des zweiten außenliegenden Zahnrads z₄ gleich 1. In diesem Fall ergibt sich das Übersetzungsverhältnis aus dem Produkt der Anzahl der Zähne des ersten innenliegenden Zahnrads z₂ und der Anzahl der Zähne des zweiten außenliegenden Zahnrads z₄.

Ferner umfasst das Getriebe eine Schalteinrichtung, die wahlweise mit dem ersten Abtriebselement oder mit dem zweiten Abtriebselement in Eingriff gebracht werden kann. Zusätzlich steht die Schalteinrichtung mit der Abtriebswelle in Eingriff. Die Schalteinrichtung ermöglicht also eine wahlweise Drehmomentübertragung von dem ersten Abtriebselement oder dem zweiten Abtriebselement auf die Abtriebswelle. Die beiden Abtriebselemente weisen unterschiedliche Drehzahlen und Drehmomente auf, wobei das Produkt aus Drehzahl und Drehmoment bei beiden Abtriebselementen zumindest nahezu gleich ist. Durch Betätigung der Schalteinrichtung kann zwischen den beiden Abtriebselementen, also den beiden Gängen des Getriebes, einem Eilgang und einem Kraftgang geschaltet werden. Vorzugsweise ist der Eilgang über eine Drehkopplung des ersten Abtriebselement und der Kraftgang über eine Drehkopplung des zweiten Abtriebselements mit der Abtriebswelle realisiert.

Das Getriebe und/oder die Schalteinrichtung sind insbesondere so ausgebildet, dass im nicht betätigten Zustand der Schalteinrichtung der Kraftgang, d.h. eine niedrige Drehzahl bzw. Verfahrgeschwindigkeit, ausgewählt ist. Dadurch kann eine versehentliche Betätigung des Eilgangs und eine Beschädigung des Getriebes und/oder der Greif- oder Spanneinrichtung und/oder des zu greifenden oder spannenden Bauteils verhindert werden. Vorzugsweise ist das Getriebe im Kraftgang selbsthemmend. Eine auf die Abtriebswelle wirkende Kraft und/oder ein auf die Abtriebswelle wirkendes Drehmoment kann das Getriebe also aufgrund des großen Übersetzungsverhältnisses nicht drehen. Dadurch wird eine bereits aufgebrachte Greif- und/oder Spannkraft bei einem Abschalten und/oder Ausfall eines zum Greifen und/oder Spannen vorgesehenen Elektromotors durch das Getriebe aufrechterhalten. Der Elektromotor muss also nicht dauerhaft ein Drehmoment aufbringen, um die notwendige Greif- oder Spannkraft aufzubringen. Ebenso muss im Falle einer manuellen Erzeugung des zum Greifen und/oder Spannen notwendigen Drehmoments, beispielsweise durch eine Kurbel, das Drehmoment nicht dauerhaft aufgebracht werden.

In einer bevorzugten Ausführungsform ist vorgesehen, dass das zweite innenliegende Zahnrad und das zweite außenliegende Zahnrad eine voneinander abweichende Anzahl an Zähnen z₃ beziehungsweise z₄ aufweisen, und dass die Differenz der Anzahl an Zähnen des ersten innenliegenden Zahnrads z₂ und des ersten außenliegenden Zahnrads z₁ sowie die Differenz der Anzahl an Zähnen des zweiten innenliegenden Zahnrads z₃ und des zweiten außenliegenden Zahnrads z₄ gleich groß sind. Dies ermöglicht einen funktionssicheren Betrieb des Getriebes.

Ferner ist bevorzugt vorgesehen, dass das erste innenliegende Zahnrad und das zweite innenliegende Zahnrad eine unterschiedliche Anzahl von Zähnen z₂ beziehungsweise z₃ aufweisen. Dies ermöglicht einen besonders funktionssicheren Betrieb des Getriebes.

Es ist bevorzugt, dass das erste innenliegende Zahnrad und das zweite innenliegende Zahnrad verschiebefest miteinander verbunden sind. Dadurch kann die Funktionssicherheit des Getriebes gewährleistet werden. Es ist besonders bevorzugt, dass das erste innenliegende Zahnrad und das zweite innenliegende Zahnrad einstückig ausgebildet sind. Dadurch kann der Montageaufwand reduziert werden.

In einer bevorzugten Ausführungsform ist vorgesehen, dass das zweite außenliegende Zahnrad und das zweite Abtriebselement verschiebefest miteinander verbunden sind. Dadurch kann die Funktionssicherheit des Getriebes erhöht werden. Es ist besonders bevorzugt, dass das zweite außenliegende Zahnrad und das zweite Abtriebselement einstückig ausgebildet sind. Dadurch kann der Montageaufwand reduziert werden.

Ferner ist es bevorzugt, dass die Schalteinrichtung ein Kupplungselement umfasst, das entlang der Getriebelängsachse verlagert werden kann. Dadurch kann ein Schaltvorgang auf einfache Weise realisiert werden.

Weiter ist von Vorteil, dass das Kupplungselement mit mindestens einem Formschlusselement drehfest verbunden ist und dass wahlweise das erste Abtriebselement oder das zweite Abtriebselement formschlüssig in das Formschlusselement eingreift. Dies ermöglicht einen funktionssicheren Betrieb des Getriebes.

Es ist ferner bevorzugt, dass das erste Abtriebselement radial in Ausnehmungen des Formschlusselements oder das zweite Abtriebselement axial in Ausnehmungen des Formschlusselements eingreift. Besonders bevorzugt ist, dass auf einer Stirnseite des zweiten Abtriebselements angeordnete Zähne in Ausnehmungen des Formschlusselements eingreifen kann. Auch dies trägt zu einem funktionssicheren Betrieb des Getriebes bei.

Es ist besonders bevorzugt, dass die Schalteinrichtung mindestens eine Verschiebeeinrichtung umfasst, welche das Kupplungselement entlang der Getriebelängsachse verlagern kann. Dadurch kann ein Schaltvorgang auf einfache Weise realisiert werden.

Ferner ist es bevorzugt, dass die Verschiebeeinrichtung ein ansteuerbares Verschiebeelement umfasst. Alternativ oder ergänzend hierzu ist es bevorzugt, dass die Verschiebeeinrichtung ein Rückstellelement umfasst. Dies ermöglicht einen funktionssicheren Betrieb des Getriebes, insbesondere bei Schaltvorgängen.

Weiter ist von Vorteil, dass das Verschiebeelement mindestens einen Pneumatikzylinder und/oder Hydraulikzylinder und/oder Hubmagneten und/oder Handhabungselement und/oder eine Motor-Spindel-Einheit und/oder Dreheinheit mit Führungsschrägen und/oder Dreheinheit mit Führungskulissen umfasst. Dadurch kann eine Verschiebung des Kupplungselements auf einfache Weise realisiert werden.

In einer bevorzugten Ausführungsform ist vorgesehen, dass das Verschiebeelement mehrere Pneumatikzylinder und/oder Hydraulikzylinder und/oder Hubmagneten und/oder Handhabungselement umfasst, die insbesondere mit gleichem Abstand zueinander auf einer zu der Getriebelängsachse konzentrischen Kreislinie angeordnet sind. Auf diese Weise kann eine Verschiebung des Kupplungselements weiter verbessert werden.

Es ist besonders bevorzugt, dass das erste außenliegende Zahnrad drehfest und insbesondere auch verschiebefest mit einem Gehäuse des Getriebes verbunden ist. Auch dies trägt zu einem funktionssicheren Betrieb des Getriebes bei.

Ferner ist es bevorzugt, dass die Antriebswelle und der Exzenter formschlüssig miteinander verbunden sind, insbesondere über Mehrkantflächen. Dadurch werden eine modulare Bauweise des Getriebes ermöglicht und eine sichere Drehmomentübertragung gewährleistet.

Die der Erfindung zugrundeliegende, eingangs genannte Aufgabe wird ferner gelöst durch eine Antriebseinheit gemäß Anspruch 12. Die Antriebseinheit umfasst ein erfindungsgemäßes Getriebe, eine Steuereinrichtung und einen Elektromotor. Eine Ausgangswelle des Elektromotors ist drehfest mit der Antriebswelle verbunden und/oder einstückig mit der Antriebswelle ausgebildet. Dies ermöglicht eine funktionssichere Drehmomentübertragung und eine kompakte Bauform der Antriebseinheit.

Es ist von Vorteil, dass die Steuereinrichtung derart eingerichtet ist, in Abhängigkeit von mindestens einer Regelgröße die Schalteinrichtung entweder mit dem ersten Abtriebselement oder mit dem zweiten Abtriebselement in Eingriff zu bringen. Dies ermöglicht einen effizienten Betrieb des Getriebes.

Bei einer bevorzugten Ausführungsform ist vorgesehen, dass die mindestens eine Regelgröße ein Sensorsignal und/oder ein Längenmaß und/oder ein Durchmessermaß und/oder ein Abstandsmaß und/oder ein Gewichtsmaß und/oder ein Positionsmaß und/oder ein Belastungsmaß und/oder einen externen Eingabewert umfasst, insbesondere eines zu greifenden oder spannenden Bauteils bei Verwendung in elektronischen Greif- oder Spanneinrichtungen. Bevorzugt umfasst das Sensorsignal Signale eines Abstandssensors und/oder eines Lastsensors und/oder eines Spannungssensors und/oder eines Stromsensors und/oder eines Drehzahlsensors. Weiter bevorzugt umfasst das Abstandsmaß insbesondere den Abstand zwischen einer oder mehreren Greif- oder Spannelementen und einem zu greifenden oder spannenden Bauteil. Dies ermöglicht einen effizienten und funktionssicheren Betrieb des Getriebes.

Es ist besonders bevorzugt, dass bei großen Abstandsmaßen die Schalteinrichtung mit dem ersten Abtriebselement in Eingriff gebracht wird und/oder dass bei großen Gewichtsmaßen oder großen Belastungsmaßen die Schalteinrichtung mit dem zweiten Abtriebselement in Eingriff gebracht wird. Vorteilhafterweise wird bei einem großen Abstand zwischen dem zu greifenden oder spannenden Bauteil und den Greif- oder Spannelementen das Kupplungselement mit dem ersten Abtriebselement in Eingriff gebracht, wohingegen bei einem geringen Abstand zwischen dem zu greifenden oder zu spannenden Bauteil und den Greif- oder Spannelementen das Kupplungselement mit dem zweiten Abtriebselement in Eingriff gebracht wird. Dies ermöglicht einen funktionssicheren Betrieb des Getriebes und eine besonders effiziente Durchführung von Spannvorgängen.

Von Vorteil ist, dass das Getriebe und der Elektromotor in einem Gehäuse derart angeordnet sind, dass das Gehäuse das Getriebe und den Elektromotor zumindest weitgehend umschließt. Dies trägt zu einer kompakten Bauform der Antriebseinheit und einem Schutz der Antriebseinheit vor Umgebungseinflüssen bei.

Die der Erfindung zugrundeliegende, eingangs genannte Aufgabe wird ferner gelöst durch eine elektronische Greif- oder Spanneinrichtung gemäß Anspruch 15. Diese umfasst eine erfindungsgemäße Antriebseinheit und mindestens zwei Greifelemente zum Greifen und/oder mindestens zwei Spannelemente zum Spannen eines Bauteils. Insbesondere umfasst die elektronische Greif- oder Spanneinrichtung mindestens eine Anschlusseinrichtung, welche die Greif- und/oder Spannelemente mit der Abtriebswelle verbindet, beispielsweise ein Zusatzgetriebe und/oder eine Gewindespindel. Dadurch wird eine effiziente und funktionssichere Handhabung des Bauteils ermöglicht.

Weitere Merkmale und Vorteile der Erfindung sind Gegenstand der nachfolgenden Beschreibung bevorzugter Ausführungsbeispiele.

In der Zeichnung zeigt:
- Fig. 1: eine Explosionsdarstellung einer erfindungsgemäßen Antriebseinheit mit einem erfindungsgemäßen Getriebe aus einer ersten Blickrichtung;
- Fig. 2: eine Explosionsdarstellung Darstellung der Antriebseinheit nach Figur 1 aus einer zweiten Blickrichtung;
- Fig. 3: eine Darstellung eines Getriebeschemas des Getriebes der Antriebseinheit nach Figur 1;
- Fig. 4: einen Längsschnitt der Antriebseinheit nach Figur 1;
- Fig. 5: eine Darstellung des Getriebeschemas nach Figur 3 in einem ersten Schaltzustand;
- Fig. 6: einen Längsschnitt der Antriebseinheit nach Figur 4 in einem ersten Schaltzustand;
- Fig. 7: eine Darstellung des Getriebeschemas nach Figur 3 in einem zweiten Schaltzustand;
- Fig. 8: einen Längsschnitt der Antriebseinheit nach Figur 4 in einem zweiten Schaltzustand; und
- Fig. 9: eine schematische Darstellung einer erfindungsgemäßen elektronischen Greif- oder Spanneinrichtung.

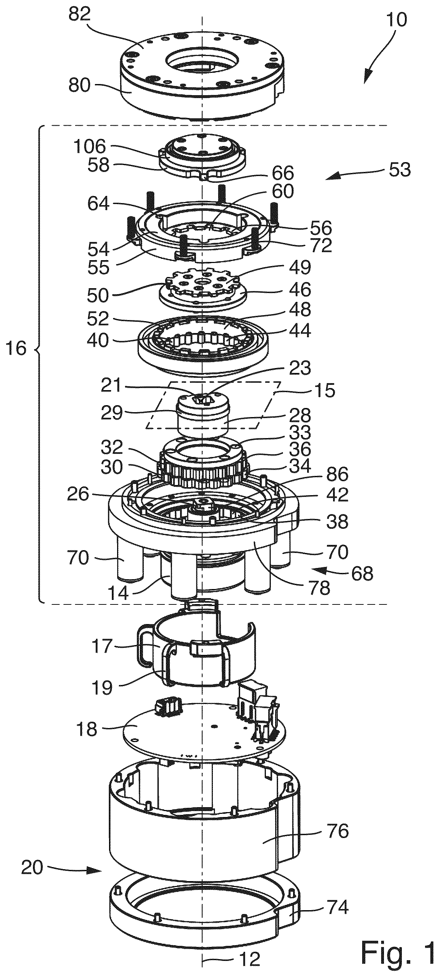

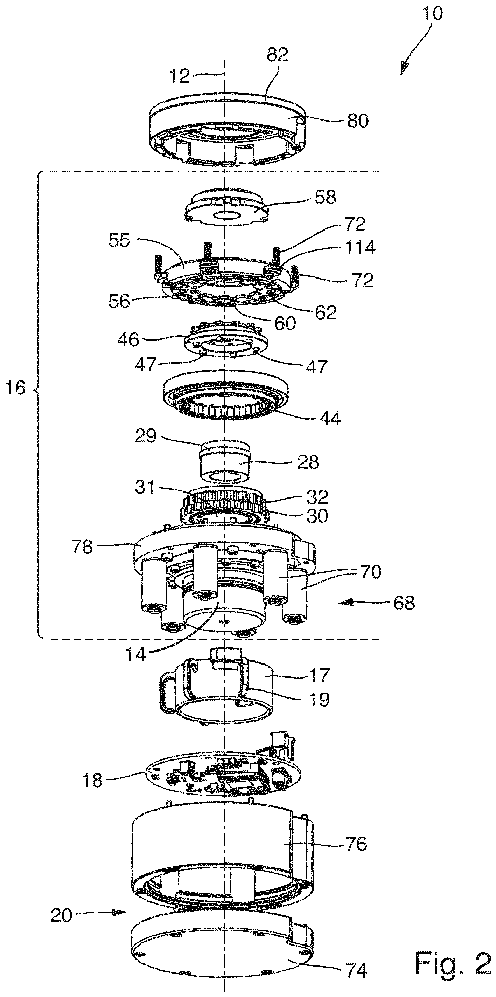

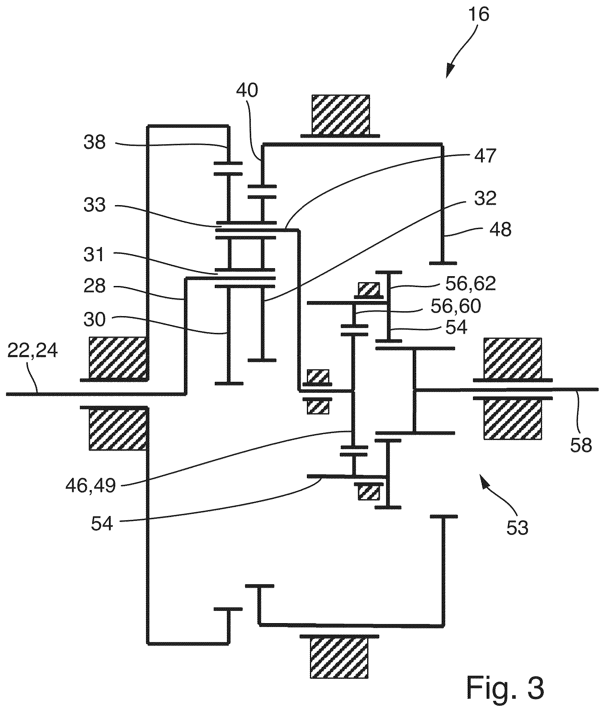

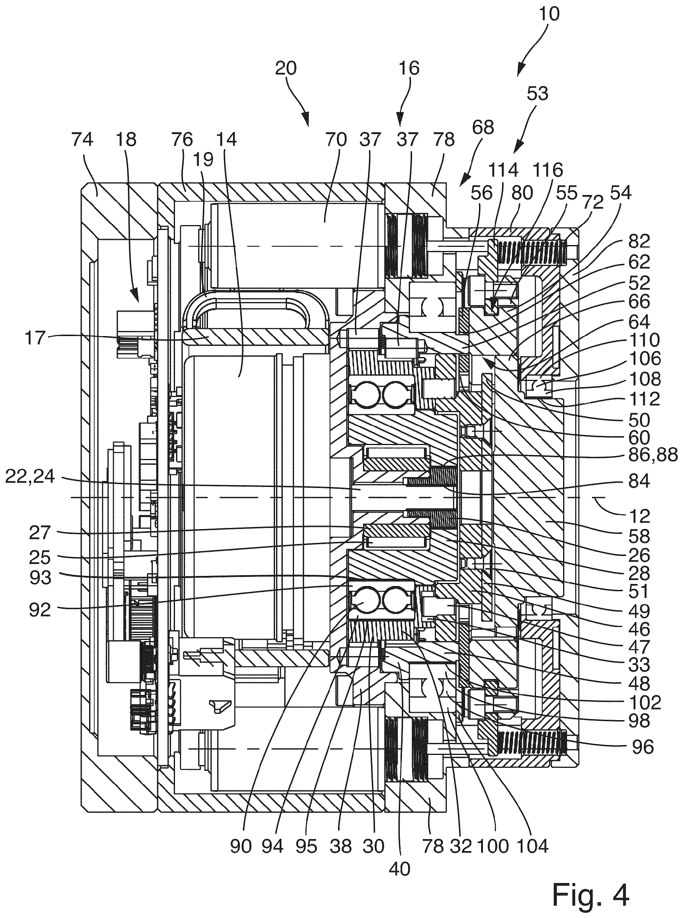

Die Figur 1 zeigt eine Antriebseinheit 10, insbesondere zur Verwendung in elektronischen Greif- oder Spanneinrichtungen, in einer Explosionsdarstellung aus einer ersten Blickrichtung. Die Figur 2 zeigt die Antriebseinheit 10 nach Figur 1 aus einer zweiten Blickrichtung. Die Figur 3 zeigt das Getriebeschema des Getriebes 16 der Antriebseinheit 10 nach Figur 1. Die Figur 4 zeigt korrespondierend einen Längsschnitt der Antriebseinheit 10 nach Figur 1.

Die Antriebseinheit 10 erstreckt sich entlang einer Getriebelängsachse 12 und umfasst einen Elektromotor 14 und ein Getriebe 16, die sich ebenfalls entlang der Getriebelängsachse 12 erstrecken. Ferner umfasst die Antriebseinheit 10 eine Motorabschirmung 17 mit Kabelführungselementen 19, eine Steuereinrichtung 18 und ein Gehäuse 20, in dem zumindest der Elektromotor 14 und insbesondere auch die Steuereinrichtung 18 angeordnet sind.

Die Steuereinrichtung 18 ist dazu eingerichtet, den Elektromotor 14 mit extern bereitgestellter elektrischer Energie zu versorgen und anzusteuern. Die extern bereitgestellte Energie kann insbesondere durch ein Stromnetz und/oder einen Akkumulator und/oder eine Batterie und/oder eine Brennstoffzelle bereitgestellt werden. Der Elektromotor 14 ist dazu eingerichtet, die elektrische Energie in eine Rotationsbewegung umzusetzen, und zumindest mittelbar in das Getriebe 16 einzuleiten. Das Getriebe 16 ist dazu eingerichtet, die Bewegung anzupassen und/oder zu transformieren und mindestens einer nicht dargestellten Baugruppe, beispielsweise einer Greif- oder Spanneinheit mit Greif- oder Spannelementen, zur Verfügung zu stellen.

Wie Figur 4 zeigt, umfasst der Elektromotor 14 eine Ausgangswelle 22, die sich entlang der Getriebelängsachse 12 erstreckt.

Das Getriebe 16 umfasst eine Antriebswelle 24, die sich entlang der Getriebelängsachse 12 erstreckt und vorzugsweise einstückig mit der Ausgangswelle 22 des Elektromotors 14 ausgebildet ist, d.h. die Ausgangswelle 22 des Elektromotors 14 ist gleichzeitig die Antriebswelle 24 des Getriebes 16. Das Getriebe 16 umfasst ein Koppelelement 26, das Mehrkantflächen 86 aufweist, und einen Exzenter 28.

Die Antriebswelle 24 ist drehfest und insbesondere auch verschiebefest entlang der Getriebelängsachse 12 mit dem Koppelelement 26 verbunden, insbesondere über eine Pressverbindung 84. Das Koppelelement 26 ist über die Mehrkantflächen 86, 88 formschlüssig und somit drehfest mit dem Exzenter 28 verbunden. Der Exzenter 28 ist auf seiner Innenseite radial abgestützt, insbesondere über ein Nadeln 25 umfassendes Nadellager 27.

Wie die Figur 1 zeigt, weist der Exzenter 28 einen auf einer orthogonal zu der Getriebelängsachse 12 verlaufenden Exzenterebenen 19 liegenden Exzentermittelpunkt 21 auf. Der Exzentermittelpunkt 21 des Exzenters 28 ist dabei der Begrifflichkeit folgend exzentrisch, d.h. nicht konzentrisch, sondern um ein Exzentrizitätsmaß 23 beabstandet zu der Getriebelängsachse 12 angeordnet. Die Getriebelängsachse 12 verläuft also nicht durch den Exzentermittelpunkt 21. Eine Außenumfangsfläche des Exzenters 28 ist also nicht konzentrisch zu der Getriebelängsachse 12 angeordnet.

Wie die Figuren 1, 2 und 4 zeigen, weist der Exzenter 28 einen Ringbund 29 auf, der auf der Außenseite des Exzenters 28 radial hervorsteht.

Ferner umfasst das Getriebe 16 ein erstes innenliegendes Zahnrad 30 und ein zweites innenliegendes Zahnrad 32, die insbesondere einstückig ausgebildet sind. Das erste innenliegende Zahnrad 30 und das zweite innenliegende Zahnrad 32 umfassen Zähne 34, 36, die insbesondere gleichmäßig entlang des jeweiligen äußeren Umfangs verteilt angeordnet sind. Vorzugsweise weicht die Anzahl der Zähne 36 des zweiten innenliegenden Zahnrads 32 von der Anzahl der Zähne 34 des ersten innenliegenden Zahnrads 30 ab. Die Zähne 34 des ersten innenliegenden Zahnrads 30 und die Zähne 36 des zweiten innenliegenden Zahnrads 32 sind insbesondere abgerundet mit bogenförmigen Flanken und insbesondere als Nocken ausgebildet. Das erste innenliegende Zahnrad 30 umfasst eine weitgehend zentrisch angeordnete, vorzugsweise kreisrunde Hauptausnehmung 31, in welcher der Exzenter 28 angeordnet ist. Insbesondere ist die Außenumfangsfläche des Exzenters 28 zumindest teilweise innerhalb der Hauptausnehmung 31 angeordnet.

Der Exzenter 28 und die Hauptausnehmung 31 sind relativ zueinander verdrehbar. Wie Figur 4 zeigt, ist zur Reibungsreduzierung zwischen dem Exzenter 28 und der Hauptausnehmung 31 ein Rotationslager 90 vorgesehen, das einen inneren Lagerring 92 und einen äußeren Lagerring 94 umfasst. Der innere Lagerring 92 ist in einem Fügeabschnitt 93 mit dem Exzenter 28 drehfest verbunden, insbesondere aufgepresst und stützt sich an dem Ringbund 29 axial ab. Der äußere Lagerring 94 ist in einem Fügeabschnitt 95 in der Hauptausnehmung 31 fixiert, insbesondere eingepresst.

Wie die Figuren 1 und 4 zeigen, umfasst das erste innenliegende Zahnrad 30 mehrere, insbesondere kreisrunde Nebenausnehmungen 33, die um die Hauptausnehmung 31 herum, insbesondere mit gleichem Winkelabstand zueinander auf einer zur Hauptausnehmung konzentrischen Kreislinie angeordnet sind.

Das Getriebe 16 umfasst darüber hinaus ein erstes außenliegendes Zahnrad 38 und ein zweites außenliegendes Zahnrad 40. Das erste außenliegende Zahnrad 38 und das zweite außenliegende Zahnrad 40 umfassen Zähne 42, 44, die insbesondere gleichmäßig entlang des jeweiligen inneren Umfangs verteilt angeordnet sind. Die Zähne 42 des ersten außenliegenden Zahnrads 38 und die Zähne 44 des zweiten außenliegenden Zahnrads 40 sind insbesondere als Rollen 37 ausgebildet. Das Nadellager 27 ist insbesondere auf dem ersten außenliegenden Zahnrad 38 abgestützt.

Das erste innenliegende Zahnrad 30 und das erste außenliegende Zahnrad 38 weisen eine voneinander abweichende Anzahl an Zähnen 34, 42 auf. Insbesondere ist die Anzahl der Zähne 42 des ersten außenliegenden Zahnrads 38 um 1 größer als die Anzahl der Zähne 34 des ersten innenliegenden Zahnrads 30. Vorzugsweise weisen auch das zweite innenliegende Zahnrad 32 und das zweite außenliegende Zahnrad 40 eine voneinander abweichende Anzahl an Zähnen 36, 44 auf. Insbesondere ist die Anzahl der Zähne 44 des zweiten außenliegenden Zahnrads 40 um 1 größer als die Anzahl der Zähne 36 des zweiten innenliegenden Zahnrads 32.

Insbesondere ist die Differenz der Anzahl an Zähnen 34, 42 gleich groß wie die Differenz der Anzahl an Zähnen 36, 44. Die Differenz der Anzahl der Zähne ist also bei beiden Zahnpaarungen identisch. Insbesondere weist das erste außenliegende Zahnrad 38 einen Zahn 42 mehr auf als erste innenliegende Zahnrad 30. Insbesondere weist das zweite außenliegende Zahnrad 40 einen Zahn 44 mehr auf als zweite innenliegende Zahnrad 32. Alternativ kann die Differenz an Zähnen 34, 42 beziehungsweise 36, 44 zwischen den innenliegenden Zahnrädern 30, 32 und den jeweils korrespondierenden außenliegenden Zahnrädern 38, 40 eine Vielzahl betragen, insbesondere 2 oder 3 oder 4.

Das zweite Außenliegende Zahnrad 40 ist relativ zu dem Gehäuse 20 verdrehbar gelagert. Wie Figur 4 zeigt, ist dazu zwischen dem zweiten außenliegenden Zahnrad 40 und dem Rahmen 78 ein Rotationslager 96 vorgesehen, das einen inneren Lagerring 98 und einen äußeren Lagerring 100 umfasst. Der innere Lagerring 98 ist in einem Fügeabschnitt 102 auf das zweite außenliegende Zahnrad 40 aufgepresst. Der äußere Lagerring 100 ist axial durch einen Sicherungsring 104 an dem Rahmen 78 gesichert.

Wie die Figuren 1 und 2 zeigen, umfasst das Getriebe 16 ferner ein erstes Abtriebselement 46 und ein zweites Abtriebselement 48. Das erste Abtriebselement 46 weist auf seiner dem Elektromotor 14 zugewandten Stirnseite mehrere sich entlang der Getriebelängsachse 12 erstreckende Mitnehmerbolzen 47 auf, die vorzugsweise in gleichem Abstand zueinander angeordnet sind und einen zumindest weitgehend zylindrischen Querschnitt aufweisen. Die Mitnehmerbolzen 47 sind korrespondierend zu den Nebenausnehmungen 33 des ersten innenliegenden Zahnrads 30 angeordnet und weisen einen kleineren Durchmesser als die Nebenausnehmungen 33 auf. Insbesondere ist der Durchmesser der Mitnehmerbolzen 47 zumindest annähernd um das doppelte Exzentrizitätsmaß 23 des Exzenters 28 kleiner als der Durchmesser der Nebenausnehmungen 47 des ersten innenliegenden Zahnrads 30. Die Mitnehmerbolzen 47 sind in den Nebenausnehmungen 33 angeordnet und können sich in diesen abwälzen bzw. drehen.

Das erste Abtriebselement 46 ist drehfest und verschiebefest, insbesondere über mindestens eine Schraubverbindung 51, mit einem Abtriebskopplungselement 49 verbunden, das auf seiner Innenseite mehrere entlang des Umfangs mit vorzugsweise gleichem Winkelabstand zueinander angeordnete Zähne 50 aufweist. Das zweite Abtriebselement 48 ist insbesondere einstückig mit dem zweiten außenliegenden Zahnrad 40 ausgebildet und weist stirnseitig mehrere entlang des Umfangs mit vorzugsweise gleichem Winkelabstand zueinander angeordnete Zähne 52 auf.

Eine Drehung der Antriebswelle 24 führt also dazu, dass sich der Exzenter 28 dreht und sich das erste innenliegende Zahnrad 30 an dem ersten außenliegenden Zahnrad 38, das unbewegt ist, abwälzt. Dabei führen das erste innenliegende Zahnrad 30 und somit auch die Nebenausnehmungen 33 eine elliptische Bewegung um die Getriebelängsachse 12 herum aus. Dies führt dazu, dass sich die Mitnehmerbolzen 47 in den Nebenausnehmungen 33 abwälzen und sich das erste Abtriebselement 46 um die Getriebelängsachse 12 dreht. Zusammenfassend wird also eine (kreisförmige) Drehbewegung der Antriebswelle 24 um die Getriebelängsachse 12 durch den in der Hauptausnehmung 31 angeordneten Exzenter 28 in eine elliptische Bewegung des ersten innenliegenden Zahnrads 30 überführt. Diese elliptische Bewegung wird durch die in den Nebenausnehmungen 33 angeordneten Mitnehmerbolzen 47 in eine (kreisförmige) Drehbewegung des ersten Abtriebselements 46 um die Getriebelängsachse 12 überführt.

Das Übersetzungsverhältnis i₁ von Drehzahl bzw. Drehmoment der Antriebswelle 24 und dem erstem Abtriebselement 46 bestimmt sich gemäß nachfolgender Formel, wobei z₁ die Anzahl der Zähne 42 des ersten außenliegenden Zahnrads 38 und z₂ die Anzahl der Zähne 34 des ersten innenliegenden Zahnrads 30 sind: ${i}_{1} = {z}_{2} / \left({z}_{1}-{z}_{2}\right)$

Insbesondere ist z₁ um 1 größer als z₂. In diesem Fall wird das Übersetzungsverhältnis i₁ durch die Anzahl der Zähne 34 des ersten innenliegenden Zahnrads 30 bestimmt. Weist dieses beispielsweise 19 Zähne 34 auf, liegt ein Übersetzungsverhältnis von 1:19 vor.

Da das erste innenliegende Zahnrad 30 und das zweite innenliegende Zahnrad 32 drehfest verbunden und insbesondere einstückig ausgebildet sind, führt eine Drehung der Antriebswelle 24 dazu, dass auch das zweite innenliegende Zahnrad 32 eine elliptische Bewegung um die Getriebelängsachse 12 ausführt. Dies führt dazu, dass das zweite innenliegende Zahnrad 32 an dem zweiten außenliegenden Zahnrad 40 abrollt und dieses antreibt. Da das zweite außenliegende Zahnrad 40 einstückig mit dem zweiten Abtriebselement 48 ausgebildet ist, wird auch das zweite Abtriebselement 48 um die Getriebelängsachse 12 gedreht.

Zusammenfassend wird also eine (kreisförmige) Drehbewegung der Antriebswelle 24 um die Getriebelängsachse 12 durch den in der Hauptausnehmung 31 angeordneten Exzenter 28 in eine elliptische Bewegung des ersten innenliegenden Zahnrads 30 und des zweiten innenliegenden Zahnrads 32 überführt. Durch das Abrollen des zweiten innenliegenden Zahnrads 32 in dem zweiten außenliegenden Zahnrad 40 wird diese elliptische Bewegung in eine (kreisförmige) Drehbewegung des zweiten außenliegenden Zahnrads 40 und damit des zweiten Abtriebselements 48 überführt.

Das Übersetzungsverhältnis i₂ dieses Getriebegangs bestimmt sich gemäß nachfolgender Formel, wobei z₁ die Anzahl der Zähne 42 des ersten außenliegenden Zahnrads 38, z₂ die Anzahl der Zähne 34 des ersten innenliegenden Zahnrads 30 sind, z₃ die Anzahl der Zähne 36 des zweiten innenliegenden Zahnrads 32 und z₄ die Anzahl der Zähne 44 des zweiten außenliegenden Zahnrads 40 sind: ${i}_{2} = 1 / \left(1-\left({z}_{1}*{z}_{3}/{z}_{2}*{z}_{4}\right)\right)$

Insbesondere sind z₁ um 1 größer z₂, z₄ um 1 größer als z₃ und der Betrag der Differenz von z₁ und z₄ gleich 1. In diesem Fall ergibt sich das Übersetzungsverhältnis von Drehzahl bzw. Drehmoment der Antriebswelle 24 und dem zweiten Abtriebselement 48 durch das Produkt der Anzahl der Zähne 34 des ersten innenliegenden Zahnrads 30 und der Zähne 44 des zweiten außenliegenden Zahnrads 40. Weisen beispielsweise das erste innenliegende Zahnrad 30 19 Zähne 34 und das zweite außenliegende Zahnrad 40 21 Zähne 44 auf, liegt ein Übersetzungsverhältnis von 1:(19x21=399) vor.

Das Getriebe 16 umfasst ferner eine Abtriebswelle 58, die um die Getriebelängsachse 12 herum drehbar ist. Dazu ist ein Rotationslager 106 vorgesehen, das einen inneren Lagerring 108 und einen äußeren Lagerring 110 umfasst. Der innere Lagerring 108 ist in einem Fügeabschnitt 112 auf die Abtriebswelle 58 aufgepresst. Der äußere Lagerring 110 stützt sich an Schultern der Kupplungsabdeckung 80 und des zweiten Gehäusedeckels 82 ab.

Das Getriebe 16 umfasst auch eine Schalteinrichtung 53, durch die wahlweise das erste Abtriebselement 46 oder das zweite Abtriebselement 48 mit der Abtriebswelle 58 zumindest mittelbar wirkgekoppelt wird. Die Schalteinrichtung 53 umfasst ein Kupplungselement 54 sowie ein drehfest und verschiebefest mit dem Kupplungselement 54 verbundenes Formschlusselement 56. Das Formschlusselement 56 weist auf seiner Innenseite mehrere radiale Ausnehmungen 60 auf, die korrespondierend zu den Zähnen 50 des Abtriebskopplungselements 49 angeordnet sind. Das Formschlusselement 56 weist ferner stirnseitig mehrere axiale Ausnehmungen 62 auf, die korrespondierend zu den Zähnen 52 des zweiten Abtriebselements 48 angeordnet sind. Das Kupplungselement 54 weist auf der Innenseite mehrere entlang des Umfangs mit vorzugsweise gleichem Winkelabstand zueinander angeordnete radiale Ausnehmungen 64 auf.

Die Abtriebswelle 58 weist auf der Außenseite mehrere radial hervorstehende Zähne 66 auf, die korrespondierend zu den Ausnehmungen 64 des Kupplungselements 54 angeordnet sind. Die Abtriebswelle 58 bildet eine Schnittstelle zu nachfolgenden, nicht dargestellten Baugruppen, beispielsweise zu einer Greif- oder Spanneinheit mit Greif- oder Spannelementen.

Das Getriebe 16 umfasst auch eine Verschiebeeinrichtung 68, die dazu ausgebildet ist, die Schalteinrichtung 53 entlang der Getriebelängsachse 12 zu verschieben und wahlweise das erste Abtriebselement 46 oder das zweite Abtriebselement 48 mit der Abtriebswelle 58 zumindest mittelbar zu koppeln.

Die Verschiebeeinrichtung 68 umfasst ein Kupplungsverschiebeelement 55, das verschiebefest zu dem Kupplungselement 54 und relativ zu dem Kupplungselement 54 verdrehbar angeordnet ist.

Die Verschiebeeinrichtung 68 umfasst ferner ansteuerbare Verschiebeelemente 70, die sich entlang der Getriebelängsachse erstrecken und insbesondere Hubmagnete und/oder Handhabungselemente und/oder Motor-Spindel-Einheiten und/oder Dreheinheiten mit Führungsschrägen und/oder Dreheinheiten mit Führungskulissen umfassen. Vorzugsweise sind die Verschiebeelemente 70 in gleichem Winkelabstand zueinander um die Getriebelängsachse 12 angeordnet. Ferner umfasst das Getriebe 16 Rückstellelemente 72, die sich insbesondere entlang der Getriebelängsachse 12 erstrecken, die insbesondere als Schraubenfedern ausgebildet sind und der Kraft der Verschiebeelemente 70 entgegenwirken. Vorzugsweise sind auch die Rückstellelemente 72 in gleichem Winkelabstand zueinander um die Getriebelängsachse 12 angeordnet.

Die Verschiebeelemente 70 und die Rückstellelemente 72 wirken auf mindestens einen Mitnehmer 114, der verschiebefest und insbesondere auch drehfest an dem Kupplungsverschiebeelement 55 angeordnet ist. Der Mitnehmer 114 und das Kupplungselement 54 sind relativ zueinander um die Getriebelängsachse 12 verdrehbar. Der Mitnehmer 114 ist insbesondere über eine Formschlussverbindung 116 mit dem Kupplungselement 54 verschiebefest gekoppelt. Der Mitnehmer 114 überträgt somit eine Ansteuerung der Verschiebeelemente 70 auf das Kupplungselement 54.

Das Gehäuse 20 ist mehrstückig ausgebildet und umfasst insbesondere einen ersten Gehäusedeckel 74, einen Grundkörper 76, einen Rahmen 78, eine Kupplungsabdeckung 80 und einen zweiten Gehäusedeckel 82.

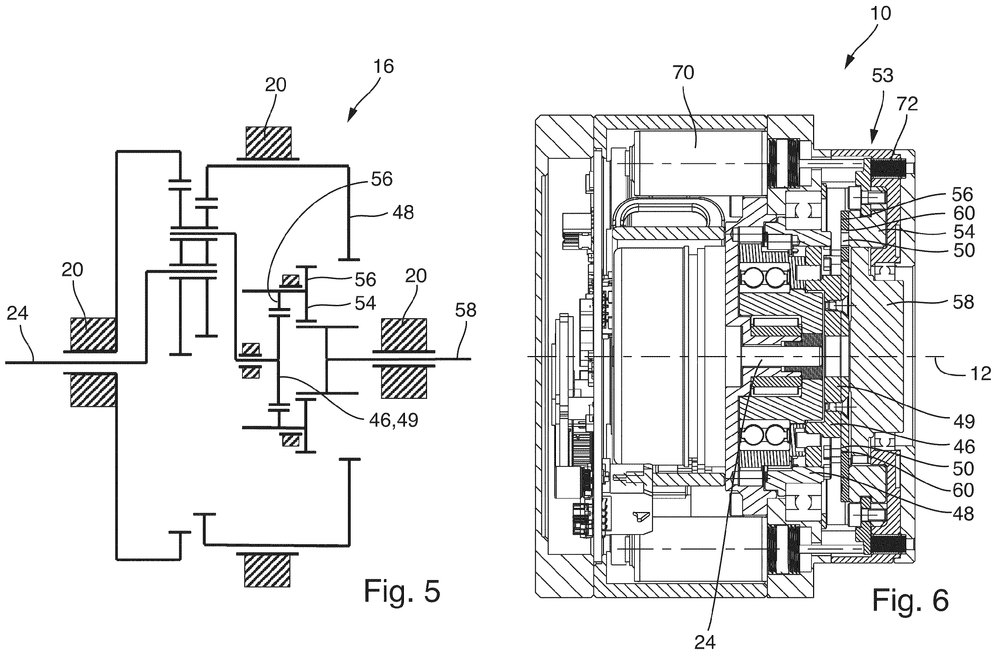

Die Figur 5 zeigt das Getriebeschema nach Figur 3 in einem ersten Schaltzustand. Die Figur 6 zeigt einen Längsschnitt der Antriebseinheit nach Figur 4 in einem ersten Schaltzustand.

Dieser erste Schaltzustand stellt eine Aktivierungslage dar, d.h. bei aktivierten Verschiebeelementen 70. Durch Aktivierung üben die Verschiebeelemente 70 eine Kraft (in Figur 6 "nach rechts") entgegen der Wirkung der Rückstellelemente 72 aus, wodurch die Schalteinrichtung 53 (in Figur 6 "nach rechts") gedrängt wird. Dadurch werden die radialen Ausnehmungen 60 des Formschlusselements 56 mit den Zähnen 50 des Abtriebskopplungselements 49 in Eingriff gebracht. Somit wird das erste Abtriebselement 46 mit dem Kupplungselement 54 und damit auch mit der Abtriebswelle 58 wirkgekoppelt.

Diese Kopplung stellt vorzugsweise einen Eilgang dar, in dem hohe Drehzahlen bzw. Verfahrgeschwindigkeiten erreicht werden, jedoch nur niedrige hohe Drehmomente bzw. Kräfte aufgebracht werden können. Der Eilgang eignet sich insbesondere zur effizienten Überbrückung langer Verfahrwege, wie sie insbesondere beim Spannen oder Greifen von Bauteilen mit stark voneinander abweichenden Abmessungen auftreten.

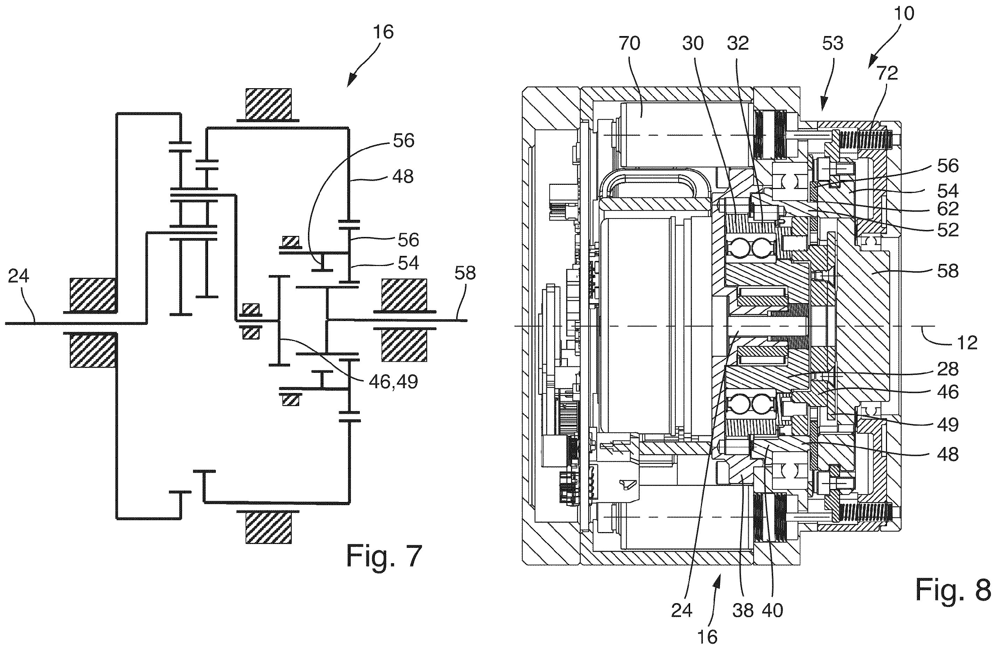

Die Figur 7 zeigt das Getriebeschema nach Figur 3 in einem zweiten Schaltzustand. Die Figur 8 zeigt einen Längsschnitt der Antriebseinheit nach Figur 4 in einem zweiten Schaltzustand.

Dieser zweite Schaltzustand stellt eine Ruhelage dar, d.h. bei nicht aktivierten Verschiebeelementen 70. Durch die (in Figur 8 "nach links") wirkende Kraft der Rückstellelemente 72 wird die Schalteinrichtung 53 (in Figur 8 "nach links") in die Ruhelage gedrängt. Dadurch werden die Ausnehmungen 62 des Formschlusselements 56 mit den Zähnen 52 des zweiten Abtriebselements 48 in Eingriff gebracht. Somit wird das zweite Abtriebselement 48 mit dem Kupplungselement 54 und damit auch mit der Abtriebswelle 58 wirkgekoppelt.

Diese Kopplung stellt vorzugsweise einen Kraftgang dar, in dem hohe Drehmomente bzw. Kräfte aufgebracht werden können, jedoch niedrige Drehzahlen bzw. Verfahrgeschwindigkeiten vorherrschen. Der Kraftgang eignet sich insbesondere zur präzisen Ansteuerung bzw. Bewegung von Greif- oder Spannelementen sowie zum Aufbringen hoher Greif- oder Spannkräfte.

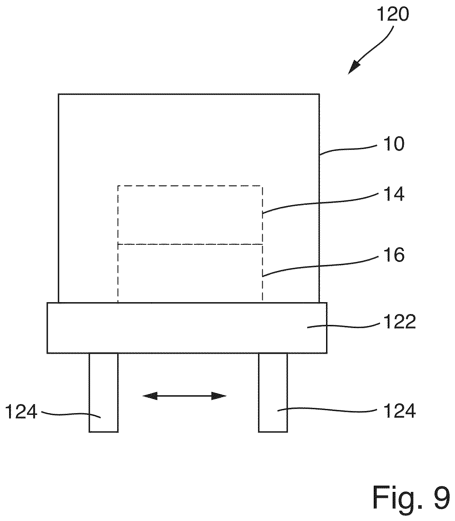

Die Figur 9 zeigt eine schematische Darstellung einer erfindungsgemäßen elektronischen Greif- oder Spanneinrichtung 120. Die elektronische Greif- oder Spanneinrichtung 120 umfasst eine Antriebseinheit 10 mit einem Elektromotor 14 und einem Getriebe 16, wobei die Antriebseinheit 10, der Elektromotor 14 und das Getriebe 16 entsprechend den Figuren 1 bis 8 ausgebildet ist. Ferner ist eine Trägerplatte 122 vorgesehen, an der mehrere aufeinander zu und voneinander weg bewegbare Greif- oder Spannelemente 124 angeordnet sind. Die Antriebseinheit 10 ist dazu ausgebildet, die Greif- oder Spannelemente 124 vorzugsweise radial zu der Getriebelängsachse 12 zu verschieben und dadurch ein nicht dargestelltes, zu greifendes oder zu spannendes Bauteil wahlweise zu fixieren oder freizugeben.

## Patentansprüche

1. Getriebe (16), insbesondere zur Verwendung in elektronischen Greif- oder Spannvorrichtungen (120), umfassend
- eine Antriebswelle (24),
- einen Exzenter (28),
- ein erstes innenliegendes, Zähne (34) umfassendes Zahnrad (30),
- ein erstes außenliegendes, Zähne (42) umfassendes Zahnrad (38),
- ein erstes Abtriebselement (46) und
- eine Abtriebswelle (58),
wobei die Antriebswelle (24) und die Abtriebswelle (58) koaxial zueinander entlang einer Getriebelängsachse (12) angeordnet sind,
wobei die Antriebswelle (24) und der Exzenter (28) drehfest miteinander verbunden sind,
wobei das erste innenliegende Zahnrad (30) mindestens eine weitgehend zentrisch angeordnete, vorzugsweise kreisrunde, Hauptausnehmung (31) aufweist,
wobei der Exzenter (28) in der Hauptausnehmung (31) des ersten innenliegenden Zahnrads (30) angeordnet ist, wobei der Exzenter (28) und das erste innenliegende Zahnrad (30) relativ zueinander verdrehbar sind,
wobei das erste innenliegende Zahnrad (30) und das erste außenliegende Zahnrad (38) eine voneinander abweichende Anzahl an Zähnen (34, 42) aufweisen,
wobei sich das erste innenliegende Zahnrad (30) an dem ersten außenliegenden Zahnrad (38) abwälzt und dabei eine elliptische Bewegung um die Getriebelängsachse (12) herum ausführt,
wobei das erste innenliegende Zahnrad (30) mehrere, insbesondere kreisrunde, Nebenausnehmungen (33) aufweist, wobei die Nebenausnehmungen (33) um die Hauptausnehmung (31) herum, insbesondere mit gleichem Winkelabstand zueinander auf einer zur Hauptausnehmung (31) konzentrischen Kreislinie, angeordnet sind,
wobei das erste Abtriebselement (46) mehrere Mitnehmerbolzen (47) aufweist,
wobei die Mitnehmerbolzen (47) einen kleineren Durchmesser aufweisen als die Nebenausnehmungen (33) des ersten innenliegenden Zahnrads (30),
wobei die Mitnehmerbolzen (47) so angeordnet sind, dass sie in die Nebenausnehmungen (33) des ersten innenliegenden Zahnrads (30) korrespondierend eingreifen,
**dadurch gekennzeichnet,**
**dass** das Getriebe (16) ein zweites innenliegendes, Zähne (36) umfassendes Zahnrad (32) umfasst,
wobei das erste innenliegende Zahnrad (30) und das zweite innenliegende Zahnrad (32) drehfest miteinander verbunden sind,
wobei das Getriebe (16) ein zweites außenliegendes, Zähne (44) umfassendes Zahnrad (40) umfasst,
wobei das zweite innenliegende Zahnrad (32) in dem zweiten außenliegenden Zahnrad (40) abrollt und dieses antreibt,
wobei das Getriebe (16) ein zweites Abtriebselement (48) umfasst,
wobei das zweite Abtriebselement (48) drehfest mit dem zweiten außenliegenden Zahnrad (40) verbunden ist, wobei das Getriebe (16) eine Schalteinrichtung (53) umfasst,
wobei die Schalteinrichtung (53) wahlweise mit dem ersten Abtriebselement (46) oder mit dem zweiten Abtriebselement (48) in Eingriff gebracht werden kann, und
wobei die Schalteinrichtung (53) mit der Abtriebswelle (58) in Eingriff steht.

2. Getriebe (16) nach Anspruch 1, **dadurch gekennzeichnet, dass** das zweite innenliegende Zahnrad (32) und das zweite außenliegende Zahnrad (40) eine voneinander abweichende Anzahl an Zähnen (36, 44) aufweisen, wobei die Differenz der Anzahl an Zähnen (34, 42) des ersten innenliegenden Zahnrads (30) und des ersten außenliegenden Zahnrads (38) sowie die Differenz der Anzahl an Zähnen (36, 44) des zweiten innenliegenden Zahnrads (32) und des zweiten außenliegenden Zahnrads (40) gleich groß sind.

3. Getriebe (16) nach Anspruch 1 oder 2, **dadurch gekennzeichnet, dass** das erste innenliegende Zahnrad (30) und das zweite innenliegende Zahnrad (32) eine unterschiedliche Anzahl von Zähnen (34, 36) aufweisen.

4. Getriebe (16) nach einem der vorstehenden Ansprüche, **dadurch gekennzeichnet, dass** das erste innenliegende Zahnrad (30) und das zweite innenliegende Zahnrad (32) verschiebefest miteinander verbunden sind.

5. Getriebe (16) nach einem der vorstehenden Ansprüche, **dadurch gekennzeichnet, dass** das zweite außenliegende Zahnrad (40) und das zweite Abtriebselement (48) verschiebefest miteinander verbunden sind.

6. Getriebe (16) nach einem der vorstehenden Ansprüche, **dadurch gekennzeichnet, dass** die Schalteinrichtung (53) ein Kupplungselement (54) umfasst, das entlang der Getriebelängsachse (12) verlagert werden kann.

7. Getriebe (16) nach Anspruch 6, **dadurch gekennzeichnet, dass** das Kupplungselement (54) mit mindestens einem Formschlusselement (56) drehfest verbunden ist, wobei wahlweise das erste Abtriebselement (46) oder das zweite Abtriebselement (48) formschlüssig in das Formschlusselement (56) eingreift.

8. Getriebe (16) nach Anspruch 7, **dadurch gekennzeichnet, dass** das erste Abtriebselement (46) radial in Ausnehmungen (60) des Formschlusselements (56) oder das zweite Abtriebselement (48) axial in Ausnehmungen (62) des Formschlusselements (56) eingreift.

9. Getriebe (16) nach einem der Ansprüche 6 bis 8, **dadurch gekennzeichnet, dass** die Schalteinrichtung (53) mindestens eine Verschiebeeinrichtung (68) umfasst, welche das Kupplungselement (54) entlang der Getriebelängsachse (12) verlagern kann.

10. Getriebe (16) nach einem der vorstehenden Ansprüche, **dadurch gekennzeichnet, dass** das erste außenliegende Zahnrad (38) drehfest und insbesondere auch verschiebefest mit einem Gehäuse (20) des Getriebes (16) verbunden ist.

11. Getriebe (16) nach einem der vorstehenden Ansprüche, **dadurch gekennzeichnet, dass** die Antriebswelle (24) und der Exzenter (28) formschlüssig miteinander verbunden sind.

12. Antriebseinheit (10), insbesondere zur Verwendung in elektronischen Greif- oder Spannvorrichtungen, umfassend ein Getriebe (16) nach einem der Ansprüche 1 bis 11, eine Steuereinrichtung (18) und einen Elektromotor (14), wobei
eine Ausgangswelle (22) des Elektromotors (14) drehfest mit der Antriebswelle (24) verbunden ist und/oder einstückig mit der Antriebswelle (24) ausgebildet ist.

13. Antriebseinheit (10) nach Anspruch 12, **dadurch gekennzeichnet, dass** die Steuereinrichtung (18) derart eingerichtet ist, in Abhängigkeit von mindestens einer Regelgröße die Schalteinrichtung (53) entweder mit dem ersten Abtriebselement (46) oder mit dem zweiten Abtriebselement (48) in Eingriff zu bringen.

14. Antriebseinheit (10) nach Anspruch 13, **dadurch gekennzeichnet, dass** die mindestens eine Regelgröße ein Sensorsignal und/oder ein Längenmaß und/oder ein Durchmessermaß und/oder Abstandsmaß und/oder ein Gewichtsmaß und/oder ein Positionsmaß und/oder ein Belastungsmaß und/oder einen externen Eingabewert umfasst.

15. Antriebseinheit (10) nach Anspruch 14, **dadurch gekennzeichnet, dass** bei großen Abstandsmaßen die Schalteinrichtung (53) mit dem ersten Abtriebselement (46) in Eingriff gebracht wird, und/oder dass bei großen Gewichtsmaßen oder großen Belastungsmaßen die Schalteinrichtung (53) mit dem zweiten Abtriebselement (48) in Eingriff gebracht wird.

16. Elektronische Greif- oder Spanneinrichtung (120) umfassend eine Antriebseinheit (10) nach einem der Ansprüche 12 bis 15 und mindestens zwei Greif- oder Spannelemente (124) zum Greifen und/oder zum Spannen eines Bauteils.
